# EUROPÄISCHE PATENTANMELDUNG

(11) **EP 0 745 517 A1**
(43) Veröffentlichungstag der Anmeldung: **04.12.1996**
(21) Anmeldenummer: 96106995.2
(22) Anmeldetag: 03.05.1996
(51) Int. Cl.: B60R 21/26

(54) **Gasgenerator mit regulierbarem Gasstrom**

(30) Priorität: 30.05.1995 DE 19519678
(71) Anmelder: TEMIC Bayern-Chemie Airbag GmbH, D-84544 Aschau (DE)
(72) Erfinder: Bauer, Hermann, 83339 Stöttham (DE); Bender, Richard, Dr., 91207 Lauf (DE); Fürst, Franz, 84453 Mühldorf (DE); Vetter, Bernhard, 83052 Bruckmühl (DE); Winterhalder, Marc, 84518 Garching/Als (DE); Zeuner, Siegfried, Dr., 81369 München (DE)
(74) Vertreter: Maute, Hans-Jürgen, Dipl.-Ing.

(57) **Zusammenfassung**

Die Erfindung beschreibt einen Gasgenerator insbesondere für passive Rückhaltesysteme mit regulierbarem Gasstrom. Bei bisherigen Systemen ist eine Regulierung des Gasstromes nicht oder nur stufenweise möglich. Die nicht auf die Anforderungen angepassten Aufblasbedingungen haben zur Folge, daß sicherheitsrelevante Prozesse nicht optimal gesteuert werden. Erfindungsgemäß wird die stufenlose Regulierung dadurch erreicht, daß eine bewegliche, steuerbare Abdeckung (15) z. B. durch einen Magneten (13) und eine Feder (14) so positioniert werden kann, daß die Abströmöffnungen (4) beliebig, das heißt den Anforderungen entsprechend mehr oder weniger abgedeckt werden. Dadurch lassen sich Rückhaltesysteme zum einen temperaturunabhängig ansteuern und es können Aufblasgeschwindigkeit und Aufblasdruck bei einem Unfall den Gegebenheiten angepaßt und sogar während dem Unfallverlauf verändert werden.

## Beschreibung

**Die Erfindung betrifft** Gasgeneratoren insbesondere für passive Rückhaltesysteme mit regulierbarem Gasstrom nach dem Oberbegriff des Patentanspruchs 1.

Es sind Rückhaltesysteme bekannt, die mit einem Gassack (Airbag) ausgestattet sind, der durch ein von einem im Gasgenerator erzeugten, Gas aufgeblasen wird. Hybrid-Gasgeneratoren bestehen aus einem mit Gas gefüllten Behälter. Dieser Gasbehälter steht unter Druck. Um das vorzeitige Ausströmen des Gases zu verhindern ist der Behälter durch einen Berstmembran verschlossen. Weil dieses Gas bei der Zündung nicht erst pyrotechnisch erzeugt werden muß, wird es als Kaltgas bezeichnet. Weiterhin beinhaltet ein Hybrid-Gasgenerator einen Anzünder, der in einer Brennkammer ragt und dort im Falle der Auslösung einen Brennsatz in Form von Treibsatzscheiben zündet. Dieses pyrotechnisch erzeugt Gas auch Heißgas genannt, zerstört den Berstmembran, so daß das Kaltgas aus dem Behälter entweichen kann. Heißgas und Kaltgas vermischen sich und entweichen unkontrolliert durch die Abströmöffnung am Brennkammergehäuse nach außen, wo sie zum Aufblasen eines Gassackes dienen oder einem anderen Verbraucher zugeführt werden.

Auch sind Systeme bekannt, die versuchen den Aufblasvorgang abhängig von den jeweiligen Anforderungen zu steuern. Hierbei handelt es sich um zwei getrennte Gasgeneratoren, die beide zum Füllen eines Gassackes verwendet werden können. Diese Gasgeneratoren leiten mit ihren unterschiedlichen Parametern verschieden starke Aufblasvorgänge ein. Beide Gasgeneratoren können durch eine gemeinsame Steuerelektronik gezündet werden, die je nach Unfallschwere oder Gewicht des Insassen darüber entscheidet ob nur der kleine Gasgenerator oder nur große Gasgenerator oder beide gleichzeitig gezündet werden. Dadurch wird ein Airbag entweder nur langsam und mit geringem Druck oder etwas schneller mit mittlerem Druck oder sehr schnell mit hohem Druck aufgeblasen.

**Nachteilig an diesen Anordnungen** ist jedoch, daß der Gasstrom an der Abströmöffnung nicht oder nur stufenweise (Stufe 1: Nur kleiner Gasgenerator; Stufe 2: großer Gasgenerator; Stufe 3: beide Gasgeneratoren) reguliert werden kann. Der Gasstrom ist durch die Betriebstemperatur, den Kaltgasdruck im Behälter und dem Durchmesser der Abströmöffnung festgelegt. Alle diese Parameter können nicht verändert werden. Somit kann eine konstante Rückhaltewirkung, um die Insassen immer optimal zu schützen, nicht erreicht werden.

**Der Erfindung liegt daher die Aufgabe zugrunde** einen Gasgenerator der eingangs genannten Art zu schaffen, bei dem der Gasstrom, der zum Füllen eines Gassackes dienen kann, stufenlos auf jede Gegebenheit einstellbar ist und temperaturunabhängig gesteuert werden kann.

**Diese Aufgabe wird erfindungsgemäß durch die kennzeichnenden Merkmale des Patentanspruchs 1 gelöst.** Hiernach wird der Gasstrom dadurch reguliert indem die Größe der Abströmfläche verändert wird. Dies wird mit einer beweglichen, steuerbaren Abdeckung realisiert, die die Abströmöffnungen beliebig bedeckt.

Vorteilhafte Weiterbildungen der Erfindung ergeben sich aus den abhängigen Ansprüchen. Hier besteht die bewegliche, steuerbare Abdeckung aus einem ferromagnetischen Material. Die Abdeckung kann an einer Rückholfeder befestigt sein und durch einen Elektromagneten so verschoben werden, daß sie eine Abströmöffnung mehr oder weniger abdeckt.

**Die mit der Erfindung erzielten Vorteile bestehen** insbesondere darin, daß der Massenstrom in einem weiten Bereich unabhängig von der Umgebungstemperatur gesteuert werden kann. Zusätzlich kann durch eine intelligente Elektronik, die verschiedene Parameter wie Sitzposition, Größe und Gewicht des Insassen oder Unfallschwere auswertet, eine optimale Ansteuerung des Gasgenerators erfolgen. Somit ist im Fall eines Unfalls eine optimale Abstimmung des Airbag-Systems auf den zu schützenden Insassen gewährleistet.

**Ausführungsbeispiele** der Erfindung und ihre vorteilhaften Weiterbildungen werden im folgenden anhand der Zeichnungen beschrieben. Es stellt dar:
**Fig. 1:** Abbildung eines kompletten erfindungsgemäßen Gasgenerators
**Fig. 2:** Detailausschnitts eines erfindungsgemäßen Gasgenerators mit geöffneter Abströmöffnung.
**Fig. 3:** Detailausschnittes eines erfindungsgemäßen Gasgenerators mit verkleinerter Abstromöffnung.

Funktionsähnliche oder baugleiche Elemente sind in den Figuren mit den gleichen Bezugszeichen versehen.

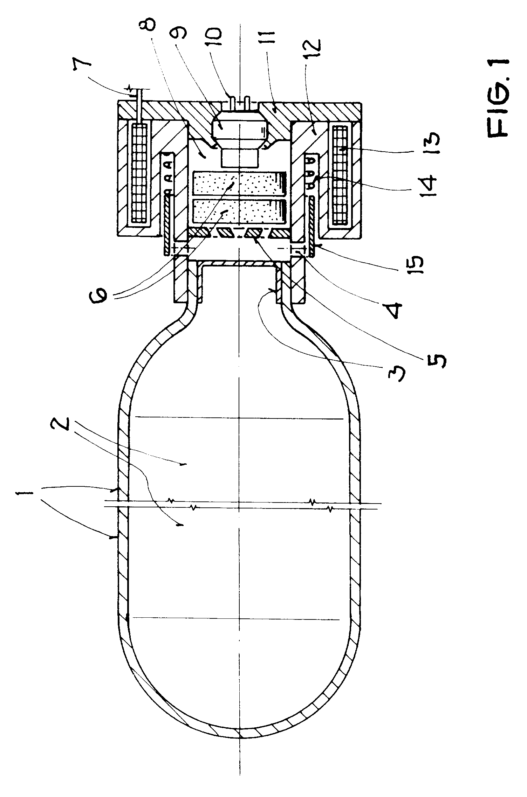

Die **Figur 1** zeigt einen erfindungsgemäßen Gasgenerator. Der Kaltgasbehälter **1**, in dem sich das Kaltgas **2** befindet, ist durch einen Berstmembran **3** verschlossen. Der Kaltgasbehälter **1** ist mit dem Berstmembran **3** voran am Brennkammergehäuse **12** befestigt. Im Brennkammergehäuse **12** sind ebenfalls Abströmöffnungen **4** eingearbeitet an denen das Gas zum Verbraucher weitergeleitet wird. Gegenüber des Berstmembrans **3** befindet sich die Brennkammerdüse **5**, die die Brennkammer **8** abschließt. In der Brennkammer befinden sich die Treibsatzscheiben **6** die nach der Zündung durch den Anzünder **9** das Heißgas produzieren. Die Kontaktierung des Anzünders **10** wird durch den Brennkammerdeckel **11**, der die Brennkammer **8** verschließt, nach außen geführt. Über den kreisförmig angeordneten Abströmöffnungen **4**, die sich in der zylinderförmigen Wand des Brennkammergehäuses **12** befinden, ist eine bewegliche, zylinderförmige Hülse oder andere Abdeckung **15** angebracht. Ein Elektromagnet **13** ist hierbei zylinderförmig um die Hülse bzw. Abdeckung **15** herum angeordnet, so daß die in Richtung des magnetischen Feldes ausgerichtet ist, so daß die magnetischen Kräfte zur vollen Wirkung kommen können. Der Elektromagnet **13** wird über die Zuleitungen **7**, die durch den Brennkammerdeckel **11** geführt werden, von einer intelligenten Steuerelektronik angesteuert, die festlegt wie der Aufblasvorgang optimal ablaufen soll.

Die Funktionweise eines derart aufgebauten Gasgenerators ist wie folgt: Wird über die Zuleitung **10** der Anzünder **9** aktiviert, so wird Energie freigesetzt, die ausreichend ist, um die Treibsatzscheiben **6** zu zünden. Bei dieser Reaktion entsteht Wärme, Gas und diverse Partikel, die mit hohem Druck durch die Brennkammerdüsen **5** entweichen, worauf sie den Berstmembran **3** des Kaltgasbehälters **1** zerstören. Das Kaltgas **2** kann austreten, sich mit dem heißen Gas vermischen und durch die Abströmöffnung **4** nach außen entweichen. Jedoch kann nun die Fläche der Abströmöffnung **4** und somit der Massestrom durch die Abströmöffnung **4** variiert werden. Dies geschieht mit Hilfe der ferromagnetische Hülse/Abdeckung **15** die mit einer Rückholfeder **14** verbunden ist. Diese Abdeckung kann über die Anziehungs- bzw. Abstoßungskraft eines Elektromagneten **13** in die eine Richtung und durch die Kraft der Rückholfeder **14** in die andere Richtung derart bewegt werden, daß sie die Abströmöffnungen **4** mehr oder weniger abdeckt. Die Stärke des Magnetfeldes ist beim Elektromagneten **13** über eine intelligente Steuerelektronik, die aufgrund verschiedener Randbedingungen den Aufblasvorgang festlegt und so den Stromfluß durch den Elektromagneten bestimmt, stufenlos regelbar. Aus diesem Grund kann die Größe der Fläche der Abströmöffnung und somit auch die Größe des Massestromes mittels ferromagnetischer Hülse/Abdeckung **15** stufenlos erfolgen. Das hat die Folge, daß ein angeschlossener Verbraucher temperaturunabhängig und mit unterschiedlichem Aufblascharakteristik bedient werden kann.

Grundvorausetzung für diese Regulierung ist jedoch, daß die Schaltzeit des Magnetverschlußes deutlich unter der Aufblaszeit des Gasgenerators liegen muß. Momentan werden Schaltzeiten von 10 ms - 25 ms mit Magnetverschlüssen realisiert. Diese Werte sind ausreichend klein.

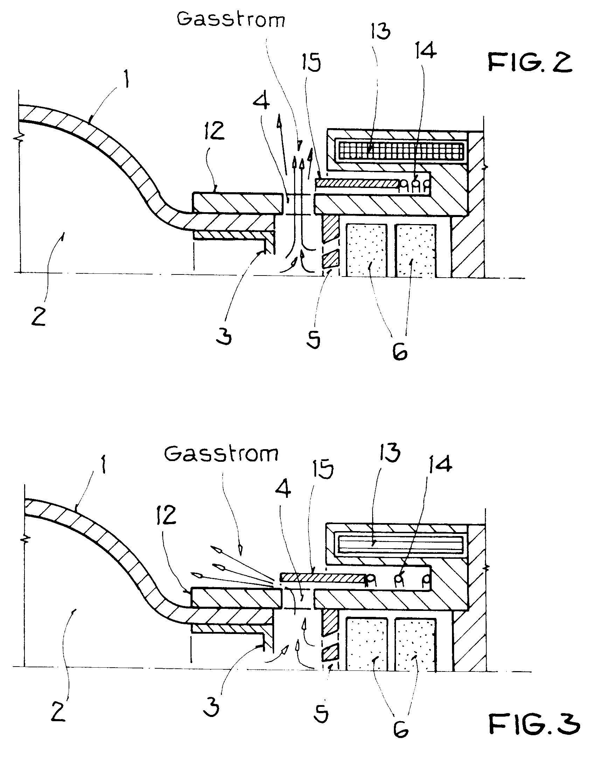

In **Figur 2** wird die maximale Fläche der Abströmöffnungen **4** in einer Detailabbildung genauer beschrieben. Ist der Antriebsmagnet **13** erregt so wird die ferromagnetische, zylinderförmige Hülse/Abdeckung **15** von der Abströmöffnung **4** weg und in den zylinderförmigen Elektromagneten **13** hinein bewegt, so daß die Rückholfeder **14** zusammengedrückt und gespannt wird. Der Gasstrom bei dem das kalte und das heiße Gas bereits vermischt ist kann nun über die gesamte Fläche der Abströmöffnung **4** abfließen. Bleibt dieser Zustand über den kompletten Aufblasvorgang hinweg bestehen, so ist ein schnellstmögliches Aufblasen bei hohem Druck gewährleistet.

In **Figur 3** wird die minimale Fläche der Abströmöffnung in einer Detailabbildung genauer beschrieben. Ist der Antriebsmagnet **13** nicht erregt so deckt die ferromagnetische, zylinderförmige Hülse/Abdeckung **15** die Abströmöffnung **4** zu und die Rückholfeder **14** ist entspannt. Der Gasstrom bei dem das kalte und das heiße Gas bereits vermischt ist kann nun über den Spalt zwischen Abströmöffnung **4** und Hülse/Abdeckung **15** abfließen. Bleibt dieser Zustand über den kompletten Aufblasvorgang hinweg bestehen, so ist nur ein sehr langsames Aufblasen bei niedrigem Druck gewährleistet. Wird die Abströmöffnung von der Hülse/Abdeckung hermetisch dicht verschlossen findet kein Aufblasvorgang statt. Das Gas verbleibt im Gasgenerator.

Die stufenlose Regelung des Massestroms kann auf verschiedene Weise erreicht werden.
Zum einen kann die Hülse/Abdeckung **15** derart in Schwingung gebracht werden, daß in Abhängigkeit von der Frequenz mit der die Hülse/Abdeckung **15** die Abströmöffnung **4** abdeckt und wieder freigibt der Massestrom des Gases stufenlos geregelt wird. Zum anderen kann auch die Hülse/Abdeckung **15** durch die Stärke des Magnetfeldes, das durch den Elektromagneten **13** erzeugt werden kann, bzw. durch die Größe der Federkonstanten der Rückholfeder **14**, an einem beliebigen Punkt über der Abströmöffnung **4** fixiert werden.

Bei den beiden oben genannten Grundprinzipien spielt es keine Rolle, ob mit der Abstoßungskraft und/oder der Anziehungskraft, die der Elektromagnet verursacht, eine Verschiebung der Hülse/Abdeckung erzielt wird. Auch kann die Rückholkraft nicht nur durch das Zusammendrücken sondern auch durch eine vorherige Dehnung der Feder erzeugt werden.
Auch sind weitere Anwendungen denkbar, bei denen die Hülse/Abdeckung im Ruhezustand, also bei abgeschaltetem Elektromagnet, die Abströmöffnungen ganz freigibt.
Auch ist es bei dieser Erfindung unwesentlich um welche Art Gasgenerator (pyrotechnisch, hybrid) es sich dabei handelt. Die einzige Bedingung, die an den Gasgenerator gestellt wird, ist, daß er über Ausströmöffnungen verfügen muß.

## Patentansprüche

1. Gasgeneratoren, insbesondere für passive Rückhaltesysteme in Kraftfahrzeugen mit Abströmöffnungen an denen das erzeugte Gas entweichen kann, **dadurch gekennzeichnet, daß** die Gesamtfläche der Abströmöffnungen durch eine bewegliche, steuerbare Abdeckung verändert werden kann.

2. Gasgenerator nach Patentanspruch 1, **dadurch gekennzeichnet, daß** sich die bewegliche, steuerbare Abdeckung vor und/oder hinter der Abströmöffnung befindet.

3. Gasgenerator nach Patentanspruch 1, **dadurch gekennzeichnet, daß** die bewegliche, steuerbare Abdeckung aus einem ferromagnetischen Material besteht.

4. Gasgenerator nach Patentanspruch 3, **dadurch gekennzeichnet, daß** die ferromagnetische Abdeckung durch die Anziehungs- bzw. Abstoßungskraft/kräfte eines Magneten bewegt wird.

5. Gasgenerator nach Patentanspruch 1, **dadurch gekennzeichnet, daß** die Abdeckung durch eine Federkraft bewegt wird

6. Gasgenerator nach einem der vorangegangenen Ansprüche, **dadurch gekennzeichnet, daß** die ferromagnetische Abdeckung durch eine magnetische Kraft in die eine Richtung und durch eine Federkraft in die andere Richtung in jede beliebige, statische Position zur Abdeckung der Abströmöffnungen gebracht werden kann.

7. Gasgenerator nach einem der Ansprüche 1 - 6, **dadurch gekennzeichnet, daß** die ferromagnetische Abdeckung durch die magnetische Kraft in die eine und durch eine Federkraft in die andere Richtung in Schwingung gebracht wird und durch die Frequenz der Schwingung bestimmt wird wie lange die Abströmöffnung verdeckt ist und dadurch der Gasstrom bzw. der Aufblasvorgang geregelt wird.

8. Gasgenerator nach einem der Ansprüche 1-7, **dadurch gekennzeichnet, daß** auch während des Aufblasvorgangs der Gasstrom durch die bewegliche, steuerbare Abdeckung verändert werden kann.
